# EUROPEAN PATENT SPECIFICATION

(11) **EP 1 410 981 B1**
(45) Date of publication and mention of the grant of the patent: **08.03.2006**
(21) Application number: 03077650.4
(22) Date of filing: 25.08.2003
(51) Int. Cl.: B62J 6/20

(54) **Reflector means for a bicycle**
Reflektoreinrichtung für ein Fahrrad
Dispositif de réflecteur pour bicyclette

(30) Priority: 14.10.2002 NL 1021642
(43) Date of publication of application: 21.04.2004
(73) Proprietor: Spanninga Metaal B.V., 8501 MK Joure (NL)
(72) Inventor: Vellinga, Jacob, 8502 AL Joure (NL)
(74) Representative: Blokland, Arie

(56) References cited:
- EP-A- 0 940 331
- DE-A- 19 630 781
- US-A- 3 951 517
- US-A- 4 117 962
- PATENT ABSTRACTS OF JAPAN vol. 1999, no. 11, 30 September 1999 (1999-09-30) & JP 11 165676 A (CHUYU SANGYO:KK;MEISETSU:KK), 22 June 1999 (1999-06-22)

## Description

The invention relates to reflector means for a bicycle, said reflector means comprising at least one retroreflector for reflecting light coming from an exposed side of the retroreflector as well as a curved surface on the exposed side of the retroreflector.

Such reflector means are known as curved retroreflectors having a curved outside surface on the exposed sider (see for example prior art document EP-A-0940331). For styling reasons it is often preferred to design the reflector means with a curved outside surface, which outside surface is for example contiguous to bicycle parts surrounding a curved surface of the reflector means. Curved retroreflectors also have a number of drawbacks, however. An important drawback is the fact that light is strongly deflected on account of the curved shape of the retroreflector, which leads to a reduced reflection capacity of the retroreflector. From this viewpoint, flat retroreflectors having a flat outside surface would be preferable, but in many cases such retroreflectors are not acceptable for aesthetic reasons. In order to ensure that the reflection capacity of a curved retroreflector complies with the official requirements, the curved retroreflector must have relatively large dimensions, at least larger than a flat retroreflector having the same reflection capacity.

The relevant official requirements in the various countries also differ from each other as regards the angle within which reflection is to take place. Conventional retroreflectors are suitable for reflecting light that falls thereon at an angle of maximally 20 degrees to the longitudinal direction of the bicycle. As a result of being inclined at an angle of 30 degrees to a plane perpendicular to the longitudinal direction of the bicycle, so-called wide-angle retroreflectors are capable of reflecting light falling thereon at an angle of maximally 50 degrees to the longitudinal direction of the bicycle. In those cases where light that falls on the reflector at an angle of 50 degrees is to be reflected, it may thus be decided to provide two wide-angle retroreflectors oriented in mirror image with respect to each other in the longitudinal direction of he bicycle, the cost price of said retroreflectors being higher than that of a single, conventional retroreflector.

Another objectionable aspect besides the larger amount of material needed for each curved reflector, is the fact that on account of the larger dimensions as explained above and also on account of the curved shape of curved retroreflectors, that the production of relatively large, curved retroreflectors by means of an injection-moulding process is technically problematic in the sense that it is difficult in practice to build up a sufficiently high afterpressure within the injection mould, which is necessary in practice in order to make the curved retroreflector sufficiently rigid for obtaining the required optical characteristics. In addition to that, the cost price of a mould for a (relatively large) curved retroreflector is considerably higher than that of a mould for a flat retroreflector.

The object of the invention is to provide a considerable improvement with regard to the aforesaid drawbacks of the prior art. In order to accomplish that objective, the retroreflector according to the invention has a substantially flat reflection side, and the reflector means comprise a separate, transparent window on the exposed side of the retroreflector, the outside surface of said transparant window forms the curved surface. In fact, advantageous aspects of flat retroreflectors and curved retroreflectors are thus combined, whilst the drawbacks of such retroreflectors as described above do not obtain. Thanks to the curved surface of the transparent window, the reflector means as a whole have a curved shape on the outside. Since the retroreflectors themselves are flat, they can be produced at a reduced cost price, whilst an optimum reflection capacity is obtained.

The reflector means preferably comprise a number of retroreflectors. The retroreflectors may have standard dimensions and form a joint reflection surface in the assembled condition.

Preferably, said retroreflectors are arranged at an angle relative to each other. A suitable selection of the angles thus makes it possible to comply with regulations that prescribe that light falling on the reflector at an angle of more than 20 degrees be reflected.

Although it is absolutely possible within the framework of the invention to embody the reflector means as separate means, which are mounted on a mudguard or a luggage carrier of a bicycle, for example, it may also be very advantageous for the reflector means to form part of a bicycle component. In this connection, a suitable component might be a handlebar stem or a luggage carrier. An important advantage of reflector means that form part of a bicycle component is that it is no longer necessary for the reflector means to be separately mounted on a bicycle.

A very suitable component for incorporating the reflector means therein is a bicycle lamp, partially because of the fact that the functions to be performed by the reflector means and lamps (in particular headlamps and rear lamps) are related. A joint light output of the reflector means and a lamp will be noticed sooner by other road-users compared with the situation in which the reflector means and a lamp would be separate elements mounted some distance apart on the bicycle.

According to a very advantageous preferred embodiment, an opening is present between the retroreflectors, through which opening light from a light source of the lamp radiates. The joint light output of the reflector means and the lamp is thus further increased.

The invention will be explained in more detail hereinafter by means of a description of a preferred embodiment of the invention, in which reference is made to the appended schematic Figures.
Figure 1a is a top plan view of an embodiment of the invention.

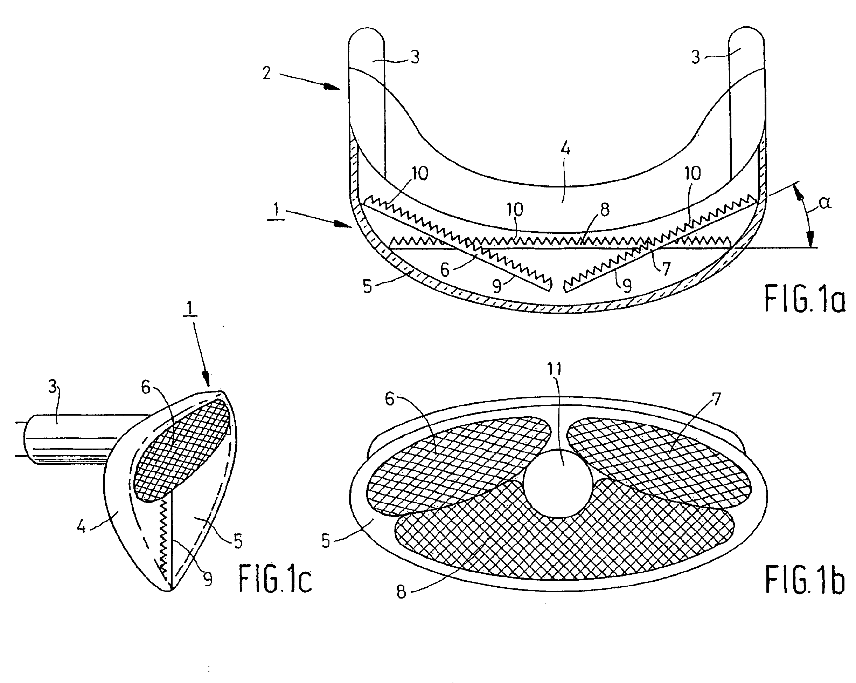

Figure 1b is a front elevation of the embodiment that is shown in Figure 1a.
Figure 1c is a side elevation of the embodiment that is shown in Figures 1a and 1b.

Figure 1a-1c show a reflector means 1 which is mounted on the rear side of a luggage carrier 2, of which only two longitudinal rods 3 are shown in Figure 1a. The reflector means 1 comprises a housing substantially consisting of a mounting plate 4, by means of which the reflector is mounted on the longitudinal rods 3 of the luggage carrier 2, and a transparent, curved window 5. Mounted in the interior of the housing are three flat retroreflectors 6, 7 and 8, each having a flat front side 9 and a toothed rear side 10. The toothed rear side 10 of each retroreflector 6, 7 and 8 causes light to be reflected in the direction of incidence, with the light passing through the transparent window 5 twice. During said passage, refraction of the light will take place to a limited extent, the extent being such, however, that the influence of said refraction on the reflection capacity of the retroreflectors 6, 7 and 8 is extremely limited.

The normal of the retroreflector 8 extends parallel to the longitudinal rods 3 and to the longitudinal direction of the bicycle in question. The retroreflectors 6 and 7 are oriented in mirror image with respect to each other whilst including an identical angle α, albeit of opposite sense, to the extent of about 30 degrees with the retroreflector 8. The retroreflectors 6, 7 and 8 are shaped and positioned relative to each other in such a manner that an opening 11 is present therebetween, which opening can be used for the passage therethrough of light from a light source that may be present behind said opening 11.

On account of their specific orientation, the retroreflectors 6 and 7 are wide-angle type retroreflectors. This enables lateral reflection of light falling on the reflector at a maximum angle of 50 degrees to the longitudinal direction of the bicycle. The retroreflector 8 is of a conventional type, which primarily functions to reflect light falling thereon at a relatively straight angle, for example light from the headlights of cars coming up from behind. Incident light is thus optimally reflected within a cone having an apex angle of 100 degrees by the reflector means 1.

## Claims

1. Reflector means (1) for a bicycle, said reflector means (1) comprising at least one retroreflector (6,7,8) for reflecting light coming from an exposed side of the retroreflector as well as a curved surface on the exposed side of the retroreflector, **characterized in that** the retroreflector (6,7,8) has a substantially flat reflection side (9), and the reflector means (1) comprise a separate, transparent window (5) on the exposed side of the retroreflector, the outside surface of said transparant window (5) forms the curved surface.

2. Reflector means according to claim 1, **characterized in that** said reflector means comprise a number of retroreflectors (6,7,8).

3. Reflector means according to claim 2, **characterized in that** said retroreflectors (6,7,8) are disposed at an angle relative to each other.

4. Reflector means according to any one of the preceding claims, **characterized in that** said reflector means form part of a bicycle component (3).

5. Reflector means according to claim 4, **characterized in that** said component is a lamp.

6. Reflector means according to claim 2 or 3 on the one hand and claim 5 on the other hand, **characterized in that** an opening (11) is present between the retroreflectors (6,7,8), through which opening (11) light from a light source of the lamp radiates.

## Patentansprüche

1. Reflektoreinrichtung (1) für ein Fahrrad, wobei die Reflektoreinrichtung (1) mindestens einen Retroreflektor (6, 7, 8) zum Reflektieren von Licht, welches von einer exponierten Seite des Retroreflektors kommt sowie eine gebogene Oberfläche auf der exponierten Seite des Retroreflektors umfasst, **dadurch gekennzeichnet, dass** der Retroreflektor (6, 7, 8) eine im wesentlichen flache Reflektionsseite (9) aufweist und die Reflektoreinrichtung (1) ein separates, transparentes Fenster (5) auf der exponierten Seite des Retroreflektors umfasst und die Außenoberfläche des transparenten Fensters (5) die gebogene Oberfläche bildet.

2. Reflektoreinrichtung gemäß Anspruch 1, **dadurch gekennzeichnet, dass** die Reflektoreinrichtung eine Anzahl an Retroreflektoren (6, 7, 8) umfasst.

3. Reflektoreinrichtung gemäß Anspruch 2, **dadurch gekennzeichnet, dass** die Retroreflektoren (6, 7, 8) in einem Winkel relativ zueinander angeordnet sind.

4. Reflektoreinrichtung gemäß einem der vorangegangenen Ansprüche, **dadurch gekennzeichnet, dass** die Reflektoreinrichtung einen Teil einer Fahrradkomponente (3) bildet.

5. Reflektoreinrichtung gemäß Anspruch 4, **dadurch gekennzeichnet, dass** die Komponente eine Lampe ist.

6. Reflektoreinrichtung gemäß Anspruch 2 oder 3 auf der einen Seite und Anspruch 5 auf der anderen Seite, **dadurch gekennzeichnet, dass** zwischen den Retroreflektoren (6, 7, 8) eine Öffnung (11) vorhanden ist, durch welche Öffnung (11) Licht von einer Lichtquelle der Lampe strahlt.

## Revendications

1. Dispositif de réflecteur (1) pour bicyclette, ledit dispositif de réflecteur (1) comprenant au moins un rétroréflecteur (6, 7, 8) destiné à refléter la lumière en provenance d'un côté exposé du rétroréflecteur, ainsi qu'une surface courbe sur le côté exposé du rétroréflecteur, **caractérisé en ce que** le rétroréflecteur (6, 7, 8) a un côté de réflexion essentiellement plat (9), et le dispositif de réflecteur (1) comprend une fenêtre transparente séparée (5) sur le côté exposé du rétroréflecteur, la surface extérieure de ladite fenêtre transparente (5) formant la surface courbe.

2. Dispositif de réflecteur selon la revendication 1, **caractérisé en ce que** ledit dispositif de réflecteur comprend plusieurs rétroréflecteurs (6, 7, 8) .

3. Dispositif de réflecteur selon la revendication 2, **caractérisé en ce que** lesdits rétroréflecteurs (6, 7, 8) sont disposés à un angle donné les uns par rapport aux autres.

4. Dispositif de réflecteur selon l'une quelconque des revendications précédentes, **caractérisé en ce que** ledit dispositif de réflecteur constitue une partie d'un composant de bicyclette (3).

5. Dispositif de réflecteur selon la revendication 4, **caractérisé en ce que** ledit composant est une lampe.

6. Dispositif de réflecteur selon l'une quelconque des revendications 2 ou 3 d'une part et la revendication 5 d'autre part, **caractérisé en ce qu'**une ouverture (11) est prévue entre les rétroréflecteurs (6, 7, 8), à travers laquelle la lumière en provenance d'une source de lumière de la lampe rayonne.
